# EUROPEAN PATENT SPECIFICATION

(11) **EP 4 165 323 B1**
(45) Date of publication and mention of the grant of the patent: **04.06.2025**
(21) Application number: 20941336.8
(22) Date of filing: 16.06.2020
(51) Int. Cl.: F16H 25/22, H02K 7/06

(54) **INVERTED BALL SCREW ACTUATOR**
UMGEKEHRTER KUGELSPINDELAKTUATOR
ACTIONNEUR À VIS À BILLES INVERSÉ

(43) Date of publication of application: 19.04.2023
(73) Proprietor: EXCESS ENGINEERING AS, 4307 Sandnes (NO)
(72) Inventor: KALVATN, Ove, 4032 Stavanger (NO); MOKRZYCKI, Adam, 4055 Sola (NO)
(74) Representative: Gevers Patents
(86) International application number: PCT/NO2020/050161
(87) International publication number: WO 2021/256934

(56) References cited:
- EP-A1- 3 354 932
- EP-A1- 3 354 932
- GB-A- 526 735
- JP-U- S5 852 359
- NO-B1- 344 441
- NO-B1- 344 441
- US-A- 2 450 282
- US-A- 5 195 721
- US-A- 5 358 265

## Description

Devices which provide a reciprocating motion through an actuator member as that member is moved through an actuation stroke are known in the prior art. Industry today has high focus on efficiency, environment and digitalization to perform operations at land, at sea and subsea. One of the focus over the past years is to use efficient electric power to perform the tasks as to replace the more inefficient hydraulic systems. An advantage to a hydraulic powered actuator is that it provides high linear forces in an extremely small packaging, typically cylinder/piston arrangement. Hydraulic systems, no matter how well maintained, leak fluid contributing to an ever-growing environment problem. Many systems have been patented and developed to compete with the hydraulic actuators, but low efficiency and large building size has prevented electric energy to become the preferred method. The present invention relates to an improved and more efficient system of transferring the rotational torque into linear force. The present invention consisting of a compact inverted ball screw linear actuator system with recirculation of bearing balls and provides the required efficiency and accuracy demanded by the industry. The present invention uses inverted ball re-circulation whereas the balls are recirculated internally in the screw body and not in the screw nut as for normal ball screw applications. As a result of the new invention more hydraulic systems can be replaced by electrical power able to perform more accurate tests, more environmentally friendly, efficient operation and allow for more remote operated and digitalized systems. Additionally, computer control of an electric motor is relatively simple. For this and other reasons mentioned above, the trend has been to directly link the rotating output shaft of an electric motor to a mechanical device which converts the rotational motion into reciprocal or linear motion. The most common method is to use a lead screw coupled directly to the motor output shaft with a follower unit traveling along the threads of the lead screw.

U.S. Pat. No. 3,660,704 discloses a motor concentrically mounted about a threaded drive element. This reduces the length of the actuator assembly unit in short stroke applications and encloses the threads. However, it substantially lengthens the actuator in long stroke applications since a smooth section equal in length to the threaded section must be included in order for the actuator shaft to slide through the bushing.

The word "linear actuator" is an ambiguous term used to broadly describe essentially any process that extends and retract a thrust member in a linear movement. The wide range term "linear actuator" is used to describe systems both in space, at surface, subsea and downhole. Linear actuators are operated by various known mechanisms, hydraulic, pneumatic, electric and manually. In addition, a further confusion is introduced as the word "linear" in the term "linear actuator" does not limit this application's use of rotational motion to perform the linear movement. In this context the word "linear" includes an apparatus converting rotational motions into a linear motion to extend and retract a thrust member, sometimes with a work piece fixed to its end to perform certain tasks. The invention could also be referred to as electrical cylinder compared to the use of name hydraulic cylinder.

Linear actuators are fast, precise and are relatively easy to use. One major objective of the invention is to provide a compact and reliable solutions for subsea equipment. Transforming subsea valve operations from hydraulic to electrical operated energy is something that the industry has been looking into and developed over years. This invention will provide the required compact design required for such application by using electrical motor(s) to operate the linear ball screw arrangement, thereby giving the required efficiency and reliability. This invention is suited both for land, at sea, in shallow water, deep-water and ultra deep-water locations.

Another major objective for this embodiment is to provide an electrical actuator for subsea operations that also provides a mechanical override function in the system, such secondary means to operate the actuator is often referred to as contingency in a situation where the primary operation method has failed. This is typically required on critical valves in subsea systems and in well control systems.

Another objective of this embodiment is to provide a mechanical system for locking the actuator in one position to prevent unintentional movement. Typically, this is required on well control system for preventing the valves to move in case of vibrations or other external forces.

At present there are a number of systems available on the market that can convert rotational movement into linear movement through a ball screw arrangement. Conventional ball screw and nut assembly has a structure that includes a round lead-screw having a continuous helical groove or thread (with accompanying lands) along its length and a follower nut or nut with a mating continuous helical groove or thread that cooperates with the external groove of the leadscrew to form a course or sized to contain a single-file row of plurality of balls, which operate in rolling contact with both the lead-screw helical grooves and follower (or nut) helical groove as one is rotated relative to the other. In general, these systems include a screw and nut mechanism with recirculating balls to transform the rotational movement into linear movement or vice versa.

Ball screw design of this type have low frictional resistance and a smooth relative rotation as compared to other type of screw thread systems. A smooth lateral movement achieved in ball screw design facilitates accurate and high-speed operations as required in typically manufacturing apparatus and robotic systems.

In ball screw and nut design the balls are recirculated by rolling along the race or course by the relative motion of the screw and nut. As a result, a structure for by-pass to recirculate the balls are required. Conventional balls screw and nut design use a variety of techniques, including the use of external and internal recirculation systems in the ball screw nut. Whereas this invention is recirculating the balls internally in the screw body.

The objective is achieved in accordance with the invention through the features which are specified in the description below and in the claims, that follow.

### IDENTIFICATION OF OBJECTS OF THE INVENTION

This invention makes available an high efficiency inverted ball screw actuator comprising an outer casing, an outer ball lead-screw with internal helical ball rolling grooves an inner ball lead-screw body having outer helical ball rolling grooves and deflector circuit for re-circulation of balls. Whereas the inner ball lead-screw body is transferring lateral movement to the piston rod and the ball rolling groves of the outer lead-screw is defining the length of the lateral movement of the piston rod.

Thanks to this solution, the travel of the piston rod protruding through the outer casing is not limited by the threads of the inner ball screw outer helical ball rolling surface as norm ally is the case for ball screw actuators.

Thanks to this solution the resistance to fatigue of the piston rod is not weakened by threads and makes it possible to make an lightweight, high efficiency ball screw actuator that can laterally transfer high loads in a casing body with similar size as an hydraulic cylinder.

The present invention provides an, bi-directional linear actuator of relatively small size (length and diameter) preferable electrically operated. The linear actuator includes a ball screw nut longer than the screw body whereas the screw body is connected to a shaft. The ball screw nut is connected to a driving unit and have internal helical grooves.

A primary object of this invention is to provide a compact device to efficient transform rotational movement in to linear (lateral) movement, and vice versa.

Another primary object for this invention is to provide a linear actuator with high efficiency that is to be used as electrical cylinder when driven by an electric motor, both the ball screw nut and ball screw body having helical grooves.

Another object is to provide a, ball screw device where the ball screw body, also referred to as inner lead-screw body is relatively shorter in length than the outer lead-screw and that the inner ball lead-screw body is jointly connected to a force transmission element, here referred to as cylindric rod.

Another object is to provide a, ball screw device that uses the inner ball lead-screw body to recirculate the plurality of balls and uses rolling contact with the outer lead-screw to transfer the load.

Another object is to provide a, ball screw device where the inner lead-screw body is formed as a piston and whereas the inner lead-screw body and cylindrical rod are non-rotating enabling the invention to work as electric cylinder.

Another object of the invention is to provide an accurate and precise tool enable to perform at a controllable speed with high positioning accuracy.

Another object of the invention is to provide a fully electrical linear actuator system without used of any hydraulics for transforming the rotational movement into linear movement, and vice versa.

Another object of the invention is to enable mechanical override for rotational motion by a surface tool or subsea by a Remote Operated Vehicle or similar as a secondary means to operate the actuator.

Another object of the invention is to enable operations both on surface, subsea and downhole in drilling or intervention operations.

Another object of the invention is to provide a spring operated fail-safe open or fail-safe close design included in the electrical actuator.

U.S 5337627 discloses a ball screw design used for transferring/tightening an object in a machine tool or in a molding machine. The drawback of this type of design having an external recirculation system is the overall size tends to be large and difficult to fit in small cylinders.

US63571 00 discloses an apparatus for actuating tooling through a planetary screw for transferring high forces to activate riveting and other tooling's as part of automatic fastening.

US2004/0103734 Discloses an apparatus for converting rotational movement into linear movement by a ball screw and nut assembly with a internally circulating system for the plurality of the balls. And that shall be easier to manufacture. The drawback of this design is the dependency of a thread system on the center screw (lateral moving shaft) making the system overall size large if the lateral moving shaft needs to be sealed off du to ambient pressure or dusty environment.

US2009/0064811 discloses a ball screw design with downsized nut and simplified circulation structure for the plurality of the balls. The screw shaft and a nut member are threadingly engaged with each other through intermediation of balls. The drawback is the dependency of thread system on the lateral moving screw.

US2013/0133453 Discloses an internal circulating ball screw and threaded shaft. The drawback in this invention is the dependency of thread system on the lateral moving lead-screw. Thus, making the design large in size and difficult to fit into a compact linear actuator. This solution also required the lead screw to be rotating.

US2007/0240532 Discloses a spindle nut for a ball screw, having a continuous ball track EP2916042 Discloses an electric linear actuator which can reduce damage and wear of the housing and perform the anti-rotation of the nut with a simple structure to improve the reliability and manufacturing cost of the electric linear actuator. The drawback of this design is the dependency of the helical grooves on the screw shaft which tends to make the overall size large by using a driving screw shaft with proportionally same length as the stroke of the piston rod.

US2004200303A1 Discloses a ball Screw device comprises a nut having a thread groove in the inner peripheral Surface thereof, a Screw shaft having a thread groove in the outer peripheral Surface thereof and a plurality of balls interposed between the respective thread grooves. In the Screw shaft, the thread groove is of at least substantially one turn. In the screw shaft is provided a ball circulation groove for coupling the downstream and upstream Sides of the thread groove So that the balls are returned to the upstream Side from the downstream Side So as to be thereby circulated. The drawback of this design is that the balls disposed in the ball circulation grooves 33 and 34 can be subject to neither a radial load nor an axial load.

US2450282A discloses a load moving device comprising in combination two members rotatable and longitudinally movable relatively to each other, one member surrounding the other; means for rotating one of said members; cooperating formations on both members for enabling rotation of the rotatable member to cause the other member to move longitudinally relatively to the rotated member, said formations comprising an endless, part helical, part diverging single turn furrow on one of said members and a helical, multi-turn groove on the other of said members; a plurality of bearing elements in the channel formed by the single turn groove and coinciding portion of the multi-turn groove, providing the only mean-, mechanically connecting the two members; and means provided at the sides of the single turn furrow, said means being shaped to enter and provide a barrier movable through the multi-turn groove, whereby the bearing elements are shunted from the helical channel and directed through the diverging portion of the single turn furrow and prevented from wedging into portions of the multi-torn groove.

### SUMMARY OF THE INVENTION

Characteristics and advantages of the present disclosure and additional features and benefits will be readily apparent to those skilled in the art upon consideration of the following detailed description of exemplary embodiments of the present disclosure and referring to the accompanying figures. It should be understood that the description herein and appended drawings, being of example embodiments, are not intended to limit the claims of this patent application, any patent granted hereon or any patent or patent application claiming priority hereto. On the contrary, the intention is to cover all modifications, equivalents and alternatives falling within the scope of the claims. Many changes may be made to the embodiments and details disclosed herein without departing from such scope. The objects, advantages, and features of the invention will become more apparent by reference to the drawings which are appended hereto and wherein like numerals indicate like parts and wherein an illustrative embodiment of the invention is shown, of which:
FIG. 1 is an illustration of an example of an inverted ball screw actuator device packed inside a housing (3) with the piston rod (12) retracted into the housing (3) according to an embodiment of the disclosure;
FIG. 2 is a side view of an example of an inverted ball screw actuator device packed inside a motor housing (3) with the piston rod (12) retracted into the housing (3) according to an embodiment of the disclosure;
FIG. 3 is a side view of an example of an inverted ball screw actuator device packed inside a motor housing (3) with the piston rod (12) fully extended out from the housing (3) according to an embodiment of the disclosure;
FI G. 4 is an illustration of an example of an inverted ball screw actuator device packed inside a housing (3) showing the drive side ( 10) of the piston rod ( 12) according to an embodiment of the disclosure;
FIG. 5 is a cross sectional illustration of an inverted ball screw actuator device showing an example of a ball screw arrangement, the piston rod (12) and drive side (10) to an embodiment of the disclosure;
FIG. 6 shows the inverted ball screw recirculation circuits (17) also referred to as cylinder piston device (5), the inverted ball screw actuator device drive side sealing device (7) and piston rod (12) sealing device (2), as an example of an embodiment of the disclosure;
FIG. 7 shows the cross-sectional illustration of an inverted ball screw, a plurality of recirculating balls (16) engaged between the outer lead-screw (4) and the inner lead-screw (5) whereas the plurality of balls only engages with the cylinder piston device in the recirculation circuits (17) according to an embodiment of the disclosure;

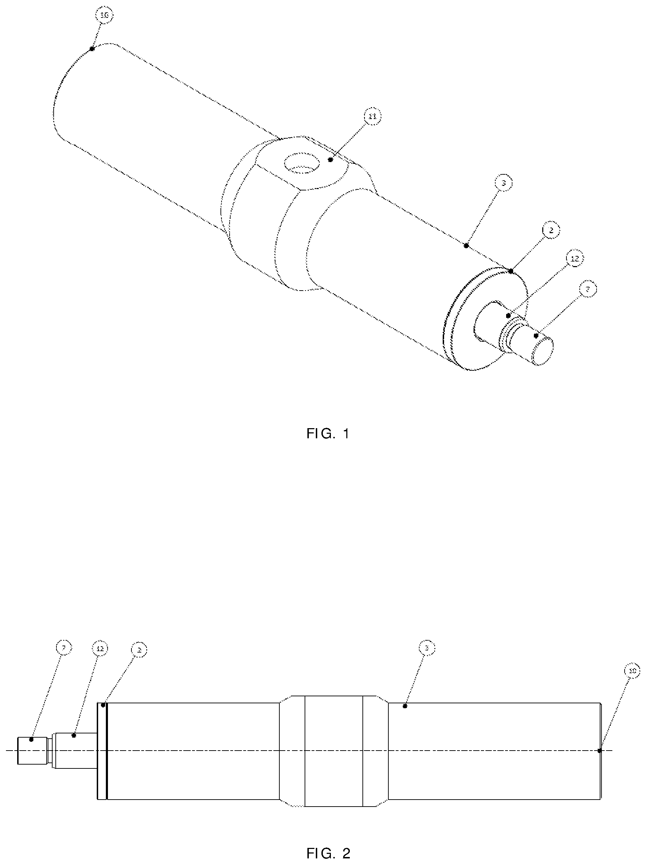

FIG. 1 shows an illustration of the inverted ball screw device external interface (11) used for securing the device to other components, this is an illustration of one type of securing method but could be arranged in a variety of known methods, the force transmission interface to external device (7) may be arranged as threaded interface according to an embodiment of the disclosure;

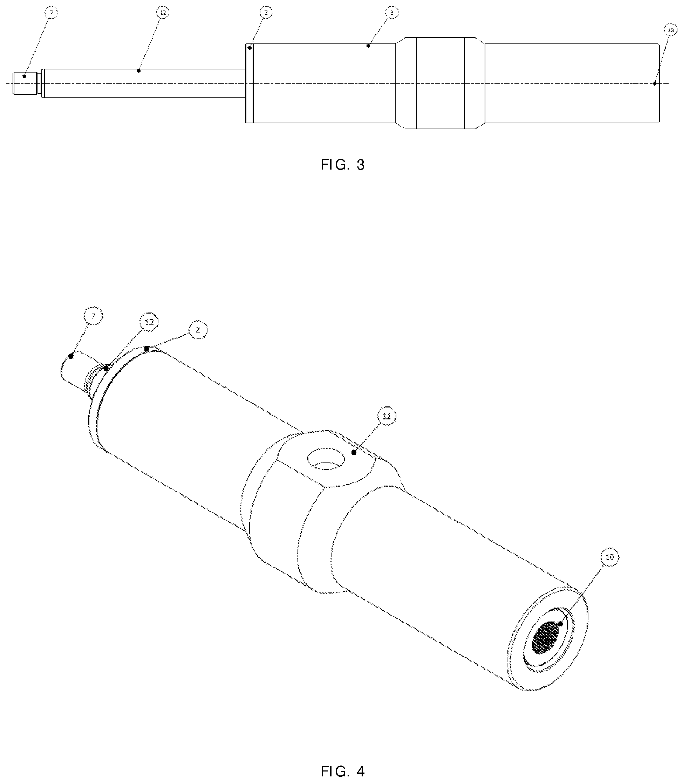

FIG. 4 shows a isometrically illustration of the inverted ball screw actuator device whereas the drive side (10) is arranged as a splined interface to the power source, the drive side (10) is protruding through a sealing device (7) and connected to the outer lead-screw (4) the drive side (10) interface to power source may be arranged in a variety of known methods, according to an embodiment of the disclosure;
Exemplary embodiment of the invention FIG. 52, shows a typical layout of an inverted ball screw actuator device, comprising force transmission element interface to external device (7) inverted ball screw housing interface to external device (11), drive unit interface device (10) connected to the outer lead-screw (4) with sealing device (7) and bearings (13), piston rod (12) with sealing device (2), and bearings (13) forming one sealed off compartment, whereas the outer lead-screw is connected to the inner lead-screw through a plurality if balls where whereas the only members penetrating the said compartment is the piston rod (12) and drive unit interface, here in this illustration formed as an spline.

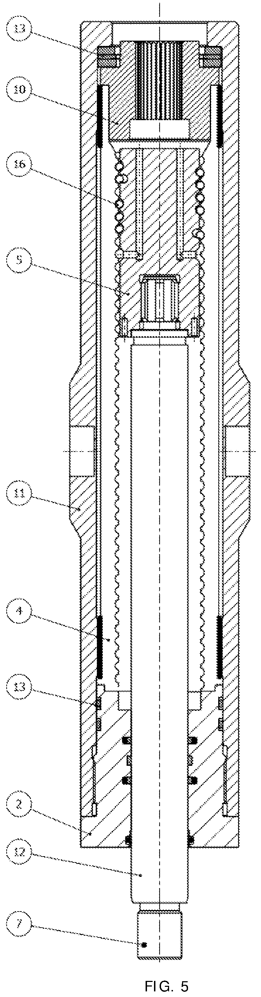

Further, the exemplary embodiment of the invention shown in FIG. 1, FIG. 2, FIG. 3, FIG. 4, FIG. 5, FIG 6 and FIG. 7, illustrates the preferred embodiment of the inverted ball screw actuator device with ball screw arrangement inside a housing (3). Rotating the drive unit interface will make the outer lead-screw (2) to rotate, through the plurality of balls (16) threadingly engaged between the outer lead-screw (4), inner lead-screw (5), it will force the inner lead-screw (5) and the piston rod (12) to move laterally in and out of the housing (3) dependent on way of rotation.

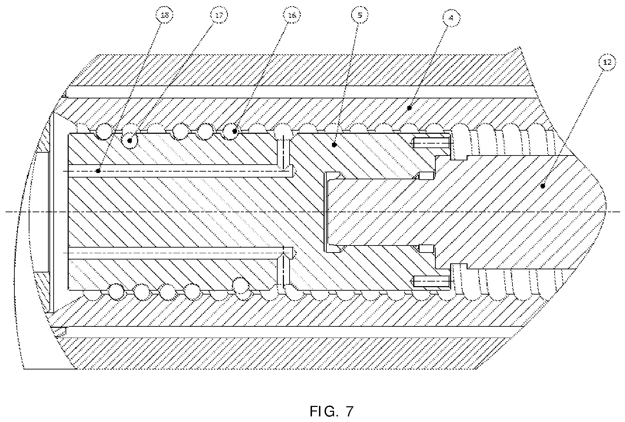

FIG. 7 illustrates the preferred embodiment of the ball screw linear actuator in a so-called open view to clarify further the components included in the circulation paths of the plurality of balls in the invention.

Further FIG. 7 illustrates the preferred embodiment of the plurality of bearing balls (16), whereas the ball screw outer lead-screw (4) having outer helical ball rolling surface with ball circulation grooves configured to rotate on the inner lead-screw (5) helical ball rolling surface through the set of balls (16).

Further FIG. 7 illustrates the ball recirculation path (17) of the invention shown with a plurality of bearing balls (16) inserted in the helical path grooves. The outer lead-screw (4) rotates while the inner lead-screw is fixed to the piston rod (12) either by fasteners, by friction, by a non-circular interface or a combination of methods. The threads of the inner lead-screw (5) have a deflector system typically every 72 degree for each ball circulation circuit. Direction of rotation for the balls is given by the rotational direction of the inverted ball screw outer lead-screw (2). The inverted deflector system in the inner lead-lead screws enables the balls to pass the top of the threads of the outer lead-screw (4)

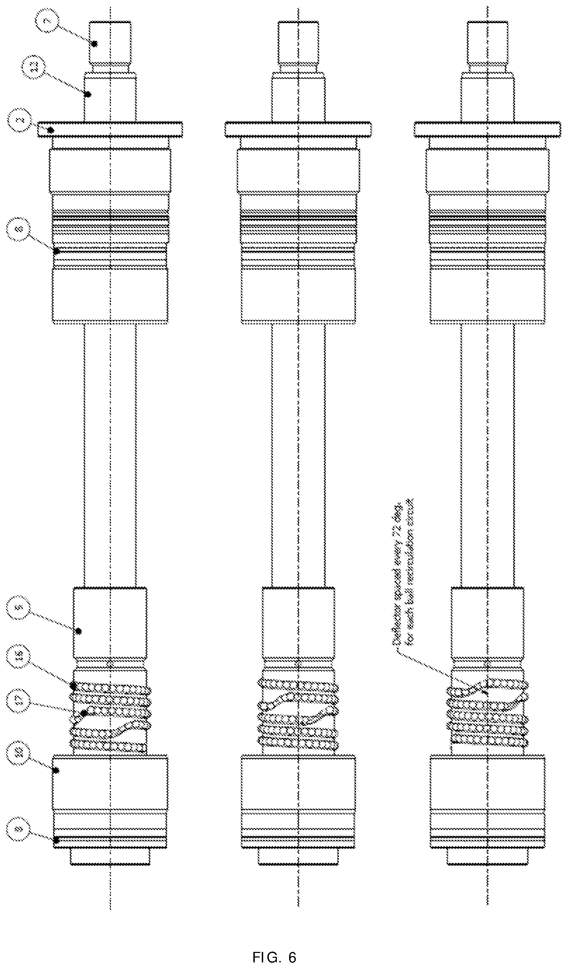

FIG. 6 illustrates the inner lead-screw of the invention, the inner lead screw (5) are formed with outer bound helical grooves and deflectors spaced typically every 72 degrees for each ball circulating circuit, that when assembled with the outer lead-screw (2) forms a deflector channel that the bearing balls can advance through. The grooves of the deflector channel (17) have diameter slightly larger than the balls (16) and are formed in a way that between the deflector entrance and deflector exit the groove opening is smaller than the ball diameter such that the balls are prevented from falling out. The inner lead-screw does not rotate but are fixed to the piston rod (12). The inner lead-screw (5) is used for recirculation of the plurality of bearing balls as outlined in FIG.7 through the ball deflector channel (17) with exit and entrance grooves. Inner and outer lead screw when invention is assembled forms a continuous groove path for the bearing balls to circulate and roll in, rolling directions of the bearing balls are determined by the direction of rotation of the ball screw nut (2).

An example of one configuration of grooves are shown in FIG. 6. As the inner lead-screw (5) is shown with deflector channels evenly spaced every 72 degree for each ball circulation circuit. The ball deflector channels are more than balls diameter deep with adequate clearance for the bearing balls to pass unimpeded over the land between the adjacent grooves of the outer lead screw (4) as shown in FIG. 4.

The illustrated embodiment in Fig. 1 to FIG. 7 preferable uses an electric motor to rotate the outer lead-screw. Electric power and communication may be supplied via a suitable electrical control lines. The control lines may be connected to a power source at suitable location either subsea or at surface. In some embodiments, the electrical control lines are coupled to control modules (not shown) and enable transfer of desired electrical signals, e.g. power and data signals (communication).

Referring now back to FIG. 1 and FIG. 3, the piston rod (12) may comprise a movable stem, or other suitable drive member which may be selectively operated via the electric motor or other type of motive member to actuate a valve or other driven component in a host at surface or subsea. According to one embodiment, the subsea electrical ball screw linear actuator comprises an actuator body having a rear face and a front face. At least one electrical connector and a mechanical interface are both positioned along the rear face.

Depending on the application, the ball screw linear actuator may be used in cooperation with various types of hosts. In subsea applications, for example, the subsea host may comprise a variety of subsea production or processing devices. Examples of such subsea host structures include a subsea tree, manifold, pump, pipeline end manifold (PLEM), pipeline end termination (PLET), or other subsea hosts.

In some embodiments, the linear ball screw actuator is used in subsea operations such as Cone Penetration Testing apparatus. Cone Penetration Test apparatus is used in the field geotechnical investigation of soil conditions. In such application the ball screw linear actuator is either connected to a umbilical for transferring power and communication or includes a battery package for operation of the linear ball screw actuator.

In some embodiments, the linear ball screw actuator is purely used to electrify hydraulic systems by replacing hydraulic cylinders both at surface, subsurface, subsea and in downhole tools

In some embodiments, the actuator mechanical interface also may comprise a bucket coupling sized and constructed for receipt in a bucket receiver of host mechanical interface. For example, the bucket coupling, and corresponding bucket receiver may be in the form of ROV bucket couplings and ROV buckets, respectively. For rotary drive members, the ROV interface between the ROV bucket coupling and bucket receiver may be constructed with a variety of cooperating configurations, e.g. according to standards described in ISO 13628-8 or API 17H.

Depending on the parameters of a given subsea operation, the electric control lines may be part of an electrical flying lead (EFL) connected between subsea control module and host electrical connectors. Additionally, actuator electrical connectors and corresponding host electrical connectors may be constructed as wet-mate connectors to facilitate coupling and decoupling in a liquid environment with simple linear motion of the electrical actuator. The installation and de-installation of the electrical actuator with respect to the host may be accomplished without a live electrical connection, i.e. without electrical power supplied to the electrical actuator during engagement and disengagement with respect to host.

The actuator mechanical interface may comprise a drive member which automatically engages the driven component, e.g. valve, via linkage or other suitable mechanism. In the illustrated embodiment, the linkage extends to and forms part of the host mechanical interface. The drive member may be in the form of a drive stem which is linearly movable by a motive member within actuator body

By way of example, if the ball screw linear actuator is used for subsea operations the electrical interface may comprise at least one electrical connector positioned along the rear face. In the example illustrated, the electrical connectors is positioned along rear face for electrical engagement with corresponding electrical connectors of host electrical interface. By way of example, the electrical connectors may comprise male/female connectors, respectively, or vice versa.

The electrical connectors (e.g. male/female connectors) may be utilized for transmission of desired electrical signals, e.g. electrical power signals, control signals, and data communication signals.

Various types of electrical connectors and/or related components may be utilized to operate the ball screw linear actuator. One example comprises stab plate connectors. In some applications, the host electrical connectors may be installed at a fixed position on, for example, a panel of the host structure but with a predefined free-floating capability for tolerance compensation. The electrical connectors also may be constructed in the form of inductive couplings able to transmit electrical power and/or data signals

## Claims

1. Linear actuator for providing rotational movement into linear movement and vice versa, the linear actuator comprising: - a piston rod (12);
- an outer ball lead-screw (4) with internal helical ball rolling grooves;
- an inner ball lead-screw body (5) having outer helical ball rolling grooves and deflector channels (17);
- the outer ball lead-screw (4) is rotated to laterally move the inner ball lead-screw body (5) through a plurality of balls (16) in rolling contact with the outer ball lead-screw (4) and the inner ball lead-screw body (5) to transfer the load and to achieve lateral movement of the piston rod (12) of the linear actuator;
- the inner ball lead-screw body (5) with deflector channel (17) between two helical ball rolling circuits communicating with each other as the recirculation groove gradually slopes into a diameter slightly larger than the ball before entering into the deflector channel (17) where the deflector groove is deep enough for the balls (16) to pass unimpeded over the land between the adjacent grooves of the outer ball lead-screw (4); and
- the number of helical ball rolling grooves on the outer ball lead-screw (4) is giving the lateral stroke of the piston rod (12),
**Characterised by**;
- the outer ball lead-screw (4) rotates and is threadingly engaged with the inner ball lead-screw body (5) through the plurality of balls (16);
- the inner ball lead-screw body (5) is fixed to the piston rod (12) and is moved laterally by the plurality of balls (16) between the outer ball lead-screw (4) and inner ball lead-screw body (5);
- the deflector channel (17) between each ball recirculation circuit on the inner ball lead-screw body (5), wherein adjacent deflector channels are circumferentially evenly spaced apart on the inner ball lead-screw body (5):
- the deflector channel is formed in a way that prevent the balls (16) to fall out of the deflector channel when passing over the land between the adjacent grooves of the outer ball lead-screw (4); and
- at least one protruding rod.

2. Linear actuator according to claim 1, wherein the piston rod (12) is connected to the inner ball lead-screw body (5) and via the inner ball lead-screw body (5) to the outer ball lead-screw (4) through the plurality of balls (16) for transferring the lateral movement into rotational movement.

3. Linear actuator according to any of claims 1 to 2 wherein the plurality of balls (16) are running among first and second grooves of the outer ball lead-screw (4) and the circulating channels in the inner ball lead-screw body (5), and the outer ball lead-screw (4) has a maximum groove depth slightly less than the diameter of the balls (16).

4. Linear actuator according to claim 1, 2, and 3, wherein the piston rod (12) is prevented from rotating.

5. Linear actuator according to claim 1, wherein the said linear actuator is having a spring system for moving the rod laterally in a said direction.

6. Linear actuator according to claim 1, further comprising end plates (2, 10) and housing (3) to support the outer ball lead-screw (4), laterally and radially, and a force for the lateral movement is provided with rotational motion from an electric motor.

7. Linear actuator according to claim 1, further comprising a drive unit having at least one electrical connector comprising inductive couplings for transmission of power and data.

8. Linear actuator according to claim 7, wherein the drive unit have at least one electrical connector is a wet-mate connector.

9. Linear actuator according to claim 8, wherein the at least one electrical connector comprises a plurality of electrical connectors.

10. Linear actuator according to claim 1, wherein the outer ball lead-screw (4) is supported laterally and radially and is connected to a mechanical override whereas the rotational energy in form of torque can be provided by a remote operated vehicle or a hand-held tool.

11. Linear actuator according to claim 1, wherein the linear actuator can be operated directly with a remote operated vehicle.

12. Linear actuator according to claim 6, wherein the housing (3) is oil filled and protected towards ambient pressure from the surrounding.

13. Linear actuator according to any of claims 1-12, further comprising a mechanical interface formed as a bucket coupling and a drive shaft.

14. Linear actuator according to claim 1 further comprising electronic limit control that senses motor current and provides end-of-stroke shut off and mid-stroke thrust shut-off.

## Patentansprüche

1. Linearbetätigungsvorrichtung zum Bereitstellen von Drehbewegung in eine lineare Bewegung und umgekehrt, wobei die Linearbetätigungsvorrichtung umfasst:
- eine Kolbenstange (12);
- eine äußere Kugelumlaufspindel (4) mit inneren schraubenförmigen Kugelrollrillen;
- einen inneren Kugelumlaufspindelkörper (5), der äußere schraubenförmige Kugelrollrillen und Deflektorkanäle (17) aufweist;
- wobei die äußere Kugelumlaufspindel (4) gedreht wird, um den inneren Kugelumlaufspindelkörper (5) durch eine Vielzahl von Kugeln (16) in Rollkontakt mit der äußeren Kugelumlaufspindel (4) und dem inneren Kugelumlaufspindelkörper (5) seitlich zu bewegen, um die Last zu übertragen und um eine seitliche Bewegung der Kolbenstange (12) der Linearbetätigungsvorrichtung zu erreichen;
- wobei der innere Kugelumlaufspindelkörper (5) mit Deflektorkanal (17) zwischen zwei schraubenförmigen Kugelrollkreisen, die miteinander in Verbindung stehen, während die Rezirkulationsrille allmählich in einen Durchmesser abfällt, der geringfügig größer ist als die Kugel, bevor sie in den Deflektorkanal (17) eintritt, wo die Deflektorrille tief genug ist, damit die Kugeln (16) ungehindert über den Steg zwischen den angrenzenden Rillen der äußeren Kugelumlaufspindel (4) verlaufen; und
- wobei die Anzahl der schraubenförmigen Kugelrollrillen auf der äußeren Kugelumlaufspindel (4) den seitlichen Hub der Kolbenstange (12) ergibt,
**dadurch gekennzeichnet, dass**;
- die äußere Kugelumlaufspindel (4) sich dreht und mit dem inneren Kugelumlaufspindelkörper (5) durch die Vielzahl von Kugeln (16) in Gewindeeingriff steht;
- der innere Kugelumlaufspindelkörper (5) an der Kolbenstange (12) befestigt ist und durch die Vielzahl von Kugeln (16) zwischen der äußeren Kugelumlaufspindel (4) und dem inneren Kugelumlaufspindelkörper (5) seitlich bewegt wird;
- der Deflektorkanal (17) zwischen jedem Kugelrezirkulationskreis am inneren Kugelumlaufspindelkörper (5), wobei angrenzende Deflektorkanäle am inneren Kugelumlaufspindelkörper (5) in Umfangsrichtung gleichmäßig beabstandet sind;
- der Deflektorkanal auf eine Weise gebildet ist, die verhindert, dass die Kugeln (16) aus dem Deflektorkanal herausfallen, wenn sie über den Steg zwischen den angrenzenden Rillen der äußeren Kugelumlaufspindel (4) verlaufen; und
- mindestens eine vorspringende Stange.

2. Linearbetätigungsvorrichtung nach Anspruch 1, wobei die Kolbenstange (12) mit dem inneren Kugelumlaufspindelkörper (5) und über den inneren Kugelumlaufspindelkörper (5) mit der äußeren Kugelumlaufspindel (4) durch die Vielzahl von Kugeln (16) zum Übertragen der seitlichen Bewegung in eine Drehbewegung verbunden ist.

3. Linearbetätigungsvorrichtung nach einem der Ansprüche 1 bis 2, wobei die Vielzahl von Kugeln (16) unter ersten und zweiten Rillen der äußeren Kugelumlaufspindel (4) und den Umlaufkanälen im inneren Kugelumlaufspindelkörper (5) laufen und die äußere Kugelumlaufspindel (4) eine maximale Rillentiefe aufweist, die geringfügig kleiner als der Durchmesser der Kugeln (16) ist.

4. Linearbetätigungsvorrichtung nach Anspruch 1, 2 und 3, wobei die Kolbenstange (12) am Drehen gehindert wird.

5. Linearbetätigungsvorrichtung nach Anspruch 1, wobei die Linearbetätigungsvorrichtung ein Federsystem zum Bewegen der Stange seitlich in einer Richtung aufweist.

6. Linearbetätigungsvorrichtung nach Anspruch 1, die weiter Endplatten (2, 10) und ein Gehäuse (3) umfasst, um die äußere Kugelumlaufspindel (4) seitlich und radial zu stützen, und wobei eine Kraft für die seitliche Bewegung mit einer Drehbewegung von einem Elektromotor bereitgestellt wird.

7. Linearbetätigungsvorrichtung nach Anspruch 1, die weiter eine Antriebseinheit umfasst, die mindestens einen elektrischen Verbinder aufweist, der induktive Kopplungen zur Übertragung von Leistung und Daten umfasst.

8. Linearbetätigungsvorrichtung nach Anspruch 7, wobei die Antriebseinheit mindestens einen elektrischen Verbinder aufweist, der ein Nasskontaktverbinder ist.

9. Linearbetätigungsvorrichtung nach Anspruch 8, wobei der mindestens eine elektrische Verbinder eine Vielzahl von elektrischen Verbindern umfasst.

10. Linearbetätigungsvorrichtung nach Anspruch 1, wobei die äußere Kugelumlaufspindel (4) seitlich und radial gestützt wird und mit einem mechanischen Override verbunden ist, während die Rotationsenergie in Form von Drehmoment von einem fernbedienten Fahrzeug oder einem Handwerkzeug bereitgestellt werden kann.

11. Linearbetätigungsvorrichtung nach Anspruch 1, wobei die Linearbetätigungsvorrichtung direkt mit einem fernbedienten Fahrzeug betrieben werden kann.

12. Linearbetätigungsvorrichtung nach Anspruch 6, wobei das Gehäuse (3) mit Öl gefüllt und gegen Umgebungsdruck aus der Umgebung geschützt ist.

13. Linearbetätigungsvorrichtung nach einem der Ansprüche 1-12, die weiter eine mechanische Schnittstelle umfasst, die in Form einer Becherkupplung und einer Antriebswelle gebildet ist.

14. Linearbetätigungsvorrichtung nach Anspruch 1, die weiter eine elektronische Begrenzungssteuerung, die den Motorstrom erfasst und eine Abschaltung am Hubende und eine Schubabschaltung in der Mitte des Hubs bereitstellt.

## Revendications

1. Actionneur linéaire pour transformer un mouvement de rotation en un mouvement linéaire, et vice versa, l'actionneur linéaire comprenant :
- une tige de piston (12) ;
- une vis-mère à billes externe (4) avec des rainures de roulement de billes hélicoïdales internes ;
- un corps de vis-mère à billes interne (5) présentant des rainures de roulement de billes hélicoïdales externes et des canaux déflecteurs (17) ;
- la vis-mère à billes externe (4) est tournée pour déplacer latéralement le corps de vis-mère à billes interne (5) au moyen d'une pluralité de billes (16) en contact roulant avec la vis-mère à billes externe (4) et le corps de vis-mère à billes interne (5) pour transférer la charge et réaliser un mouvement latéral de la tige de piston (12) de l'actionneur linéaire ;
- le corps de vis-mère à billes interne (5) avec le canal déflecteur (17) entre deux circuits de roulement de billes hélicoïdaux communiquant entre eux au fur et à mesure que la rainure de recirculation s'incline progressivement vers un diamètre légèrement plus grand que ce lui de la bille avant d'entrer dans le canal déflecteur (17) là où la rainure du déflecteur est suffisamment profonde pour que les billes (16) passent sans entrave au-dessus de l'étendue entre les rainures adjacentes de la vis-mère à billes externe (4) ; et
- le nombre de rainures de roulement de billes hélicoïdales sur la vis-mère à billes externe (4) donne la course latérale de la tige de piston (12),
**caractérisé par** :
- la vis-mère à billes externe (4) qui tourne et est mise en prise de manière vissée avec le corps de vis-mère à billes interne (5) au moyen de la pluralité de billes (16) ;
- le corps de vis-mère à billes interne (5) qui est fixé à la tige de piston (12) et est déplacé latéralement par la pluralité de billes (16) entre la vis-mère à billes externe (4) et le corps de vis-mère à billes interne (5) ;
- le canal déflecteur (17) entre chaque circuit de recirculation de billes sur le corps de vis-mère à billes interne (5), dans lequel des canaux déflecteurs adjacents sont espacés uniformément de manière circonférentielle sur le corps de vis-mère à billes interne (5) ;
- le canal déflecteur qui est formé de manière à empêcher les billes (16) de tomber hors du canal déflecteur lors du passage sur l'étendue entre les rainures adjacentes de la vis-mère à billes externe (4) ; et
- au moins une tige faisant saillie.

2. Actionneur linéaire selon la revendication 1, dans lequel la tige de piston (12) est reliée au corps de vis-mère à billes interne (5) et par le biais du corps de vis-mère à billes interne (5) à la vis-mère à billes externe (4) au moyen de la pluralité de billes (16) pour transférer le mouvement latéral en un mouvement de rotation.

3. Actionneur linéaire selon l'une quelconque des revendications 1 à 2, dans lequel la pluralité de billes (16) circulent entre des première et seconde rainures de la vis-mère à billes externe (4) et les canaux de circulation dans le corps de la vis-mère à billes interne (5) et la vis-mère à billes externe (4) présente une profondeur de rainure maximale légèrement inférieure au diamètre des billes (16).

4. Actionneur linéaire selon la revendication 1, 2 et 3, dans lequel la tige de piston (12) est empêchée de tourner.

5. Actionneur linéaire selon la revendication 1, dans lequel ledit actionneur linéaire comporte un système de ressort pour déplacer la tige latéralement dans une dite direction.

6. Actionneur linéaire selon la revendication 1, comprenant en outre des plaques d'extrémité (2, 10) et un boîtier (3) pour supporter la vis-mère à billes externe (4), latéralement et radialement, et une force pour le mouvement latéral est fournie par un mouvement de rotation provenant d'un moteur électrique.

7. Actionneur linéaire selon la revendication 1, comprenant en outre une unité d'entraînement présentant au moins un connecteur électrique comprenant des couplages inductifs pour une transmission de puissance et de données.

8. Actionneur linéaire selon la revendication 7, dans lequel l'unité d'entraînement présente au moins un connecteur électrique qui est un connecteur d'accouplement humide.

9. Actionneur linéaire selon la revendication 8, dans lequel le au moins un connecteur électrique comprend une pluralité de connecteurs électriques.

10. Actionneur linéaire selon la revendication 1, dans lequel la vis-mère à billes externe (4) est supportée latéralement et radialement et est raccordée à un dispositif de neutralisation mécanique tandis que l'énergie de rotation sous forme de couple peut être fournie par un véhicule télécommandé ou un outil portatif.

11. Actionneur linéaire selon la revendication 1, dans lequel l'actionneur linéaire peut être actionné directement avec un véhicule télécommandé.

12. Actionneur linéaire selon la revendication 6, dans lequel le boîtier (3) est rempli d'huile et protégé de la pression ambiante provenant de l'environnement.

13. Actionneur linéaire selon l'une quelconque des revendications 1-12, comprenant en outre une interface mécanique formée sous la forme d'un accouplement à godet et d'un arbre d'entraînement.

14. Actionneur linéaire selon la revendication 1 comprenant en outre une commande de limite électronique qui détecte le courant du moteur et fournit une coupure de fin de course et une coupure de poussée à mi-course.
